# EUROPÄISCHE PATENTSCHRIFT

(11) **EP 0 499 035 B1**
(45) Veröffentlichungstag und Bekanntmachung des Hinweises auf die Patenterteilung: **22.05.1996**
(21) Anmeldenummer: 92100555.9
(22) Anmeldetag: 15.01.1992
(51) Int. Cl.: H01M 2/10

(54) **Akkumulatoren-Batterie mit Tragbügeln**
Accumulateur battery with carrying handles
Batterie d'accumulateurs munies d'anses

(30) Priorität: 13.02.1991 DE 9101618 U
(43) Veröffentlichungstag der Anmeldung: 19.08.1992
(73) Patentinhaber: VB Autobatterie GmbH, D-30419 Hannover (DE)
(72) Erfinder: Eisenacher, Werner, Dipl.-Ing., W-3204 Nordstemmen 4 (DE)
(74) Vertreter: Kaiser, Dieter Ralf, Dipl.-Ing.

(56) Entgegenhaltungen:
- EP-A- 0 297 229
- EP-B- 0 210 317
- FR-A- 2 514 568
- GB-A- 1 452 102

## Beschreibung

Die Erfindung geht aus von einer Akkumulatoren-Batterie nach der Gattung des Hauptanspruchs, wie sie schon aus der EP- 0 210 317 A1 bekannt ist; diese Akkumulatoren-Batterie ist mit einem klappbaren Tragbügel-Paar versehen, das in eine senkrechte und in eine waagerechte Stellung klappbar ist, in seiner senkrechten Stellung mit seinen Griffbereichen derart nahe beieinanderliegt, so daß letztere mit nur einer einzigen Hand zu umgreifen sind, und deshalb - insbesondere bei größeren Akkumulatoren-Batterien - keine sichere Handhabung beim Einbau in eine Halterung bzw. beim Ausbau aus einer Halterung in einem Kraftfahrzeug und auch keinen problemlosen Transport erlauben. In der waagerechten Stellung sind die Griffbereiche dieser Batterie-Tragbügel voneinander abgewendet.

Der EP-A1 297229 ist eine Akkumulatorenbatterie zu entnehmen, bei der zwei C-förmige Tragegriffe in die Oberseite des Deckels integriert sind. Die Handgriffe sind daher im Nichtgebrauchszustand nicht hinderlich. Die Griffbereiche der Tragegriffe sind einander zugewendet.

Die erfindungsgemäße Akkumulatoren-Batterie mit den kennzeichnenden Merkmalen des Hauptanspruchs hat den Vorteil, daß sie sowohl bei ihrem Transport als auch beim Einbau bzw. Ausbau in bzw. aus einer Halterung in einem Kraftfahrzeug sicher und problemlos handhabbar ist. Die erfindungsgemäße Akkumulatoren-Batterie weist bei in waagerechter Stellung befindlichen Tragbügeln eine ebene, besonders tragfähige Oberfläche auf, die für das beim Transport übliche Stapeln von Akkumulatoren-Batterien zweckmäßig ist. Die Montage der Tragbügel kann vollautomatisch erfolgen; sie ist damit robotergerecht und in der Fertigung von großem Vorteil.

Durch die in den Unteransprüchen aufgeführten Maßnahmen sind vorteilhafte Weiterbildungen und Verbesserungen der im Hauptanspruch angegebenen Akkumulatoren-Batterie möglich. Besonders vorteilhaft ist es, daß das Tragbügel-Paar auch seitlich nicht über den Blockdeckel hinausragt und beim Einbau in eine Halterung bzw. bei ihrem Ausbau aus derselben auch bei beengten Verhältnissen noch gut zu handhaben ist. Von unverzichtbarer Wichtigkeit ist auch die Sicherung der Tragbügel gegen Herausrutschen aus den napfartigen Vertiefungen im Blockdeckel anläßlich der Handhabung derartiger Akkumulatoren-Batterien. Besondere Erwähnung bedarf auch die einfache Montierbarkeit der Tragbügel am Blockdeckel, was auf entsprechende Einrastverbindungen zwischen Blockdeckel und Tragbügeln bewirkt wird.

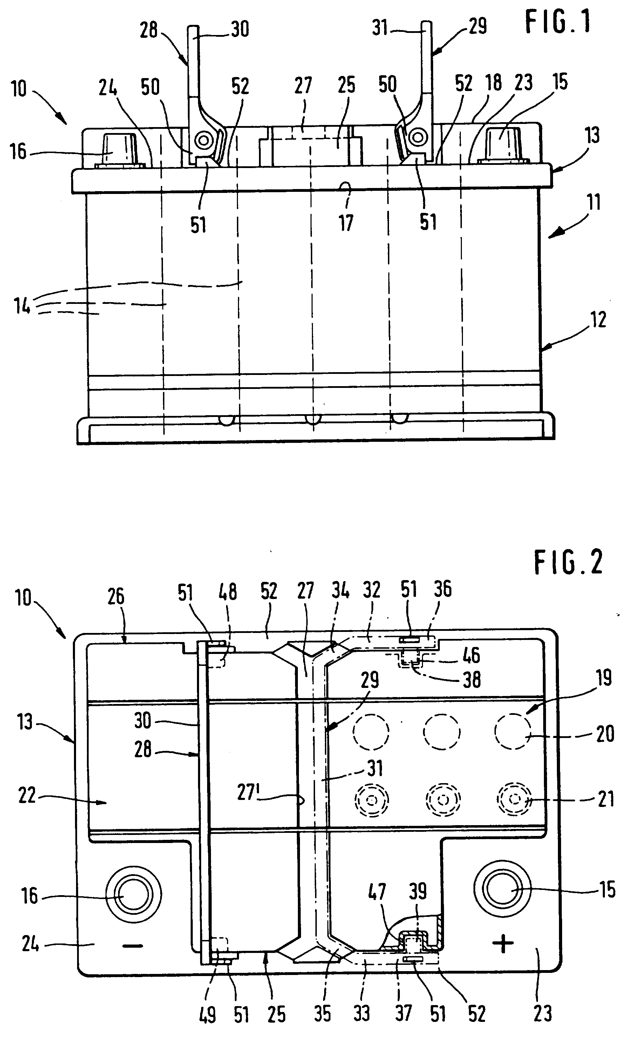

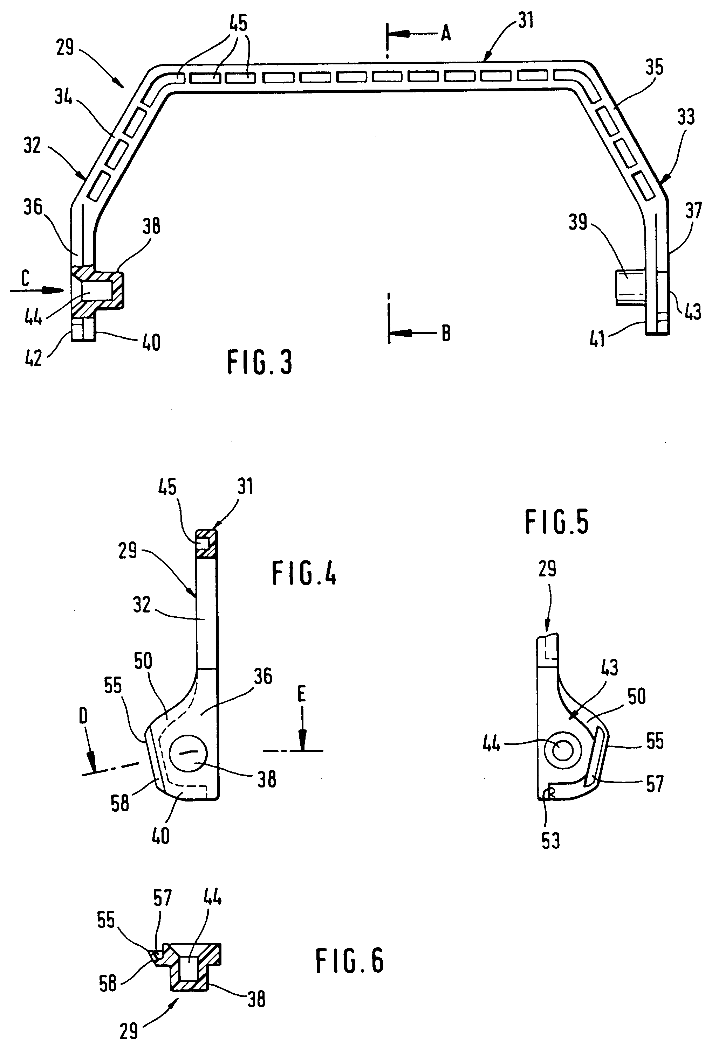

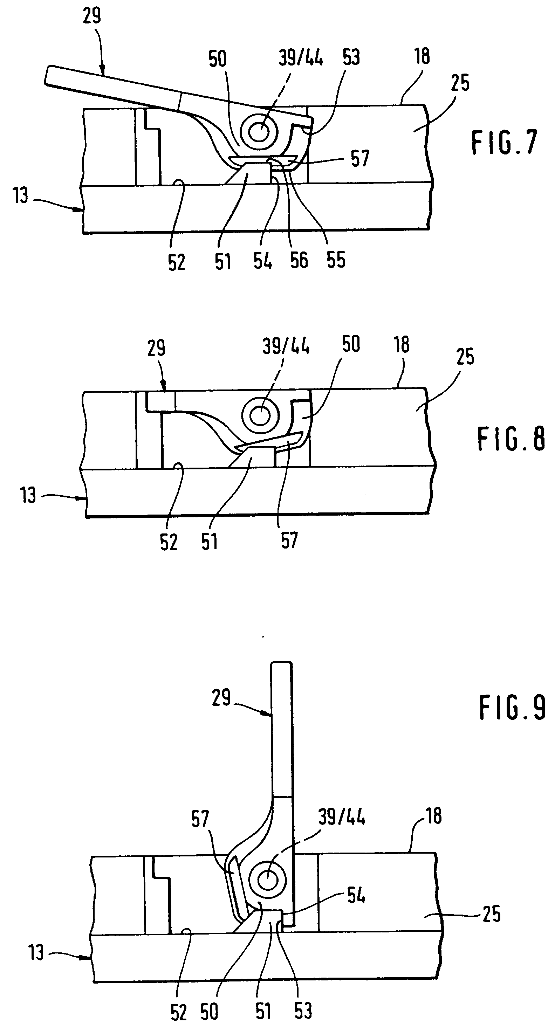

Ein Ausführungsbeispiel der Erfindung ist in der Zeichnung dargestellt und in der nachfolgenden Beschreibung näher erläutert. Es zeigen Figur 1 die Ansicht einer Längsseite einer verkleinert dargestellten Akkumulatoren-Batterie mit in senkrechter Stellung befindlichen Tragbügeln, Figur 2 die Draufsicht auf die Akkumulatoren-Batterie nach Figur 1, wobei der linke Tragbügel in senkrechter Stellung und der rechte Tragbügel strichpunktiert in waagerechter Stellung dargestellt ist, Figur 3 einen verkleinert dargestellten Tragbügel, Figur 4 den durch den Tragbügel nach Figur 3 gelegten Schnitt nach der Linie A-B, Figur 5 die auf den linken Endabschnitt des Tragbügels in Figur 3 gerichtete Ansicht gemäß Pfeil C, Figur 6 den durch den linken Endabschnitt des Tragbügels in Figur 4 gelegten Schnitt nach der Linie D-E, Figur 7 die Seitenansicht eines in Montagestellung befindlichen Tragbügels in bereits im Blockdeckel eingerasteter Stellung, Figur 8 die Seitenansicht des in waagerechter Stellung befindlichen, im Blockdeckel versenkten Tragbügels nach Figur 7 und Figur 9 die Seitenansicht des in senkrechter Stellung befindlichen Tragbügels nach Figur 7 bzw. 8.

Die in den Figuren 1 und 2 dargestellte Akkumulatoren-Batterie 10 hat ein im wesentlichen prismatisches Gehäuse 11, das sich aus einem Blockkasten 12 und einem Blockdeckel 13 zusammensetzt. Der Blockkasten 12 ist bei der hier beispielsweise dargestellten Akkumulatoren-Batterie 10 in sechs senkrecht und nebeneinander angeordnete Zellengefäße 14 unterteilt, in denen in bekannter Weise (nicht dargestellte) Plattenblöcke und Elektrolyt enthalten sind. Die genannten Plattenblöcke setzen sich dabei aus negativen und positiven Elektroden-Platten und zwischen diesen Elektrodenplatten befindlichen Separatoren zusammen. Bei heutzutage zumeist verwendeten Akkumulatoren-Batterien 10 für Kraftfährzeuge finden Elektrodenplatten Verwendung, die im wesentlichen aus Blei bzw. Bleiverbindungen bestehen und deren Elektrolyt verdünnte Schwefelsäure ist. Die Elektrodenplatten in den Zellengefäßen 14 sind über (nicht dargestellte) Plattenverbinder parallelgeschaltet und die Plattenblöcke in den Zellengefäßen 14 sind über (nicht dargestellte) Zellenverbinder zumeist in Reihe geschaltet, wobei der Anfang dieser Reihenschaltung als positiver Anschlußpol 15 und das Ende dieser Reihenschaltung als negativer Anschlußpol 16 abgedichtet nach oben durch den Blockdeckel 13 ragen. Der Blockdeckel 13 ist mit der Oberkante 17 des Blockkastens 13 abdichtend verbunden, und zwar derart, so daß er das Gehäuse 11 nach außen und die Zellengefäße 14 untereinander abdichtend verbindet.

Der Blockdeckel 13 hat in seiner Oberseite 18 ein Labyrinth 19, von dem aus in jedes Zellengefäß eine Flüssigkeitseinfüllöffnung 20 und eine Entgasungsöffnung 21 ausgeht und das von einer Abdeckkappe 22 von oben verschlossen ist; diese zum Blockdeckel 13 gehörende Abdeckkappe 22 schließt bündig mit der Oberseite 18 des Blockdeckels 13 ab und weist mindestens eine Entgasungsöffnung (nicht dargestellt) auf. Die beiden Anschlußpole 15 und 16 ragen durch den Blockdeckel 13 in Bereichen 23 und 24, die gegenüber der Oberseite 18 des Blockdeckels 13 vertieft angeordnet sind und an einer der beiden Längsseiten 25 (26) dieses Blockdeckels 13 in der Nähe der Ecken angeordnet sind. Die Anschlußpole 15 und 16 sind dabei in ihrer Höhe derart bemessen, so daß sie mit ihrem freien Ende nicht über die Oberseite 18 des Blockdeckels hinausragen. Die Anschlußpole 15 und 16 sowie auch die (nicht dargestellten) Platten- und Zellenverbinder bestehen ebenfalls aus Blei bzw. Bleilegierungen. Der Blockkasten 12, der Blockdeckel 13 und die Abdeckkappe 22 des Gehäuses 11 bestehen bevorzugt aus thermoplastischem, elektrolytbeständigem Kunststoff.

Während das Labyrinth 19 im Blockdeckel 13 in Längserstreckung der Akkumulatoren-Batterie 10 verläuft, haben dieser Blockdeckel 13 und die Abdeckkappe 22 in ihrer Oberseite 18 auch noch einen oben offenen Kanal 27, 27', der quer zur Längserstreckung der Akkumulatoren-Batterie angeordnet ist, und zwar in der Mitte der Längserstreckung der Akkumulatoren-Batterie 10. In diesem Kanal 27 liegen von zwei C-förmigen Tragbügeln 28 und 29 deren Griffbereiche 30 bzw. 31, gegebenenfalls von deren freien Schenkeln 32 bzw. 33 auch noch an die Griffbereiche 30 bzw. 31 anschließende schräg verlaufende Tragbügel-Abschnitte 34 bzw. 35 und zwar, wenn die Tragbügel 28 und 29 sich in ihrer waagerechten Stellung befinden. Anstelle dieses einen, für beide Tragbügel 28 und 29 vorgesehenen Kanals 27 können alternativ zwei voneinander beabstandete, parallele Kanäle Verwendung finden. Die Tragbügel 28 und 29 (siehe Figur 3) besitzen an ihren freien Endabschnitten 36 und 37 jeweils einen Drehzapfen 38 bzw. 39, die jeweils auf den sogenannten Rückseiten 40 und 41 der freien Endabschnitte 36 bzw. 37 herausragen, also aufeinanderzuweisen und die bevorzugt bei der Herstellung von Tragbügeln 28, 29 mit angeformt werden; zwecks Gewichts- und Materialersparnis und auch aus fertigungstechnischen Gründen sind diese Drehzapfen 38 und 39 von der sogenannten Vorderseite 42 bzw. 43 mit je einem angefasten Sackloch 44 versehen. Zur Material- und Gewichtsersparnis und auch aus fertigungstechnischen Gründen sind die Griffbereiche 30, 31 der Tragbügel 28, 29 und auch in deren Abschnitte 34 und 35 sacklochartige Aussparungen 45 mit eingeformt.

Die Drehzapfen 38, 39 der Tragbügel 28, 29 ragen im Blockdeckel 13 in napfartige Vertiefungen 46, 49, von denen jeweils zwei in jede der beiden Längsseiten 25 und 26 des Blockdeckels 13 eingeformt sind und die sich paarweise gegenüberliegen; die sich jeweils auf der gleichen Längsseite (z. B. 25) befindenden napfartigen Vertiefungen (z. B. 47 und 49) sind dabei jeweils symmetrisch zur Mitte der Längserstreckung der Akkumulatoren-Batterie mit Abstand zueinander angeordnet.

Die beiden Tragbügel 28 und 29 sind in eine waagerechte Stellung zu schwenken, die für die Lagerung von Akkumulatoren-Batterien 10 und auch für den in Kraftfahrzeugen vorgesehenen Einbauzustand eingenommen wird und bei der die beiden Tragbügel 28 und 29 nicht über die Oberseite 18 und auch nicht über die Seiten des Blockdeckels 13 hinausragen. Die Tragbügel 28 und 29 sind aus dieser waagerechten Stellung in eine senkrechte Stellung zu schwenken, bei der dann die Griffbereiche 30 und 31 jeweils mit einer Hand umfaßt werden können und ein sicherer Transport der Akkumulatoren-Batterie und auch ein sicherer Einbau in eine Batterie-Halterung (nicht dargestellt) in einem Kraftfahrzeug oder der Ausbau aus einer solchen erfolgen kann. In der waagerechten Stellung der beiden Tragbügel 28, 29 sind deren Griffbereiche 30 und 31 einander zugerichtet. In dieser waagerechten Stellung der Tragbügel 28 und 29 sind Mittel vorgesehen bzw. Vorkehrungen getroffen, welche die Tragbügel 28 und 29 in dieser waagerechten Stellung arretieren; als Arretierung können dabei (nicht dargestellte) Einrastungen dienen, im vorliegenden Beispiel wurde als ein solches Mittel eine enge Passung zwischen dem Kanal 27 und den Tragbügeln 28 bzw. 29 gewählt; es genügt, wenn diese enge Passung zwischen Kanal 27 im Blockdeckel 13 und den Tragbügeln 28 bzw. 29 bereichsweise vorliegt.

Aus den Figuren 4 bis 6 der Zeichnung sind von den beiden Tragbügeln 28 und 29, die ja beide identisch sind, weitere Details gezeigt. Anhand des freien Schenkels 32 am Tragbügel 29 werden diese Details näher erläutert: Dieser freie Schenkel 32 des Tragbügels 29 weist an seinem freien Endabschnitt 36 einen flanschartigen Sicherungsbereich 50 auf, der koaxial zum Drehzapfen 38 angeordnet ist. Bei waagerechter Stellung des Tragbügels 29 schließt dieser flanschartige Sicherungsbereich 50 bündig mit der Oberseite 18 des Blockdeckels 13 ab, während er zur gegenüberliegenden Seite des Tragbügels 29 hin bauchförmig gestaltet ist. Dieser flanschartige Sicherungsbereich 50 wirkt mit einem lappenartigen Vorsprung 51 zusammen, der am Blockdeckel 13 auf einem waagerechten Absatz 52 mit angeformt ist, nach oben weist, mit Abstand vor dem Bereich der napfartigen Vertiefung 46 steht, jedoch unterhalb dieser napfartigen Vertiefung 47 mit seinem freien Ende endet; der Absatz 52 des Blockdeckels 13 liegt üblicherweise in der gleichen Ebene wie die vertieften Bereiche 23 und 24, aus denen die Anschlußpole 15 und 16 herausragen. Der flanschartige Sicherungsbereich 50 des Tragbügels 29 befindet sich teilweise zwischen diesem lappenartigen Vorsprung 51 des Blockdeckels und der zugehörigen Längsseite 26 des Blockdeckels 13 und ist dabei mit seiner Rückseite 40 dieser Längsseite 26 des Blockdeckels 13 zugekehrt. Infolge dieser Anordnung von flanschartigem Sicherungsbereich 50, Tragbügel 29 mit seinem Drehzapfen 38 und dem lappenartigen Vorsprung 51, die ja an allen vier freien Endabschnitten 36 und 37 der Tragbügel 28 und 29 vorhanden sind, sind die Tragbügel 28 und 29 vor einem Herausrutschen ihrer Drehzapfen 38 bzw. 39 aus den jeweils zugehörigen napfartigen Vertiefungen 46 bis 49 gesichert; aufgrund dieser Sicherung der Tragbügel 28 und 29 am Blockdeckel 13 kann die Akkumulatoren-Batterie 10 mittels dieser Tragbügel 28 und 29 auch auf einer Unterlage seitlich verschoben werden, ohne daß die Gefahr des Lösens der Tragbügel 28 bzw. 29 gegeben ist.

Um die Tragbügel 28 und 29 in ihrer senkrechten Stellung in etwa zu fixieren, ist auf den Vorderseiten 43 der flanschartigen Sicherungsbereiche 50 an den Tragbügeln 28 und 29 jeweils ein Anschlag 53 mit angeformt, der in etwa senkrechter Stellung der Tragbügel 28, 29 gegen eine Anschlagfläche 54 des jeweiligen lappenartigen Vorsprungs 51 anschlägt.

Um die Tragbügel 28, 29 einfach mit dem Blockdeckel 13 montieren zu können, sind ihre flanschartigen Sicherungsbereiche 50 mit einer Begrenzungsseite 55 versehen, die sich dann geringfügig mit einer oberen Begrenzungsfläche 56 am jeweiligen lappenartigen Vorsprung 51 überlappt, wenn der entsprechende Tragbügel 28, 29 in derjenigen Schwenkstellung ist, in der er soeben aus seinem Kanal 27 im Blockdeckel 13 herausgeschwenkt ist (siehe Figur 7). Wenn der Tragbügel 28, 29 in waagerechter Stellung ist (siehe Figur 8) oder wenn er sich in seiner senkrechten Stellung befindet (siehe Figur 9), dann ist die Überlappung zwischen lappenartigem Vorsprung 51 und flanschartigem Sicherungsbereich 50 größer und damit sicherer als im Falle der Montagestellung gemäß Figur 7.

- Damit aber auch die in der Montagestellung gemäß Figur 7 vorliegende Überlappung von lappenartigem Vorsprung 51 und flanshartigem Sicherungsbereich 50 einfach und bruchsicher durchgeführt werden kann, ist auf der Vorderseite 43 jedes flanschartigen Sicherungsbereichs 50, und zwar parallel zur Begrenzungsseite 55 eine Nut 57 mit eingeformt, die zusammen mit einer auf der Rückseite 40 des flanschartigen Sicherungsbereichs 50 ebenfalls mit angeformten, von der Begrenzungsseite 55 ausgehenden, Schräge 58 zusammwirkt. Die Begrenzungsseite 55 des flanschartigen Sicherungsbereiches 50 ist durch die Nut 57 und die Schräge 58 in derjenigen Richtung nachgiebig, in der der jeweilige Drehzapfen 38, 39 des zugehörigen Tragbügels 28, 29 in die entsprechende napfartige Vertiefung 46 bzw 48 hineingesteckt wird, so daß die Begrenzungsflächen 56 ohne wesentlichen Kraftaufwand über den jeweiligen lappenartigen Vorsprung 51 geschnappt werden können; beim Versuch, die Drehzapfen 38, 39 wieder aus den napfartigen Vertiefungen 46-49 herausziehen zu wollen, ist der die Begrenzungsseite 55 bildende Bereich aber nicht nachgiebig, was eine sichere Arretierung der Tragbügel 28, 29 am Blockdeckel 13 der Akkumulatoren-Batterie zur Folge hat.

Die im vorliegenden Beispiel beschriebene Akkumulatoren-Batterie 10 mit ihren Tragbügeln 28 und 29 ist sicher zu transportieren und beim Einbau in eine Halterung, z. B. in einem Kraftfahrzeug, bzw. beim entsprechenden Ausbau aus der Halterung gut und sicher zu handhaben.

## Patentansprüche

1. Akkumulatoren-Batterie (10), insbesondere Bleiakkumulatoren-Batterie für Kraftfahrzeuge, mit einem im wesentlichen prismatischen Gehäuse (11), das sich aus einem alle Zellengefäße (14) bildenden Blockkasten (12) und einem die Zellengefäße (14) abdekkenden Blockdeckel (13) zusammengesetzt, der am Blockkasten (12) befestigt ist und die Zellengefäße (14) untereinander und das Gehäuse (11) nach außen hin abdichtet, der (Blockdeckel 13) außerdem bevorzugterweise vertiefte Bereiche (23, 24) aufweist, aus denen mit ihrem freien Ende höchstens bis zur Höhe der Oberseite (18) des Blockdeckels (13) reichende Anschlußpole (15, 16) herausragen, der (Blockdeckel 13) femer an jeder seiner beiden Längsseiten (25, 26) zwei napfartige Vertiefungen (46-49) aufweist, die symmetrisch zur Mitte der Längserstreckung der Akkumulatoren-Batterie (10) mit Abstand zueinander angeordnet sind, und der (Blockdeckel 13) darüber hinaus mit zwei quer zur Längserstreckung der Akkumulatoren-Batterie (10) angeordneten C-förmigen Tragbügeln (28, 29) verbunden ist, deren freie Endabschnitte (36, 37) mit jeweils einem quer zur Längserstreckung der Akkumulatoren-Batterie (10) weisenden, in die napfartigen Vertiefungen (46-49) des Blockdeckels (13) eintauchenden Drehzapfen (38, 39) versehen sind und die (Tragbügel 38, 39) in eine im wesentlichen senkrechte und in eine waagrechte Stellung klappbar sind, wobei sie in der waagrechten Stellung nicht über die Oberseite (18) des Blockdeckels (13) hinausragen, dadurch gekennzeichnet, daß die beiden Tragbügel (28, 29) in ihrer waagerechten Stellung in einem ihrer C-förmigen Konfiguration angepaßten, oben offenen Kanal (27) in der Oberseite (18) des Blockdeckels (13) liegen und dabei mit ihren Griffbereichen (30, 31) einander zugewendet sind und daß außerdem die napfartigen Vertiefungen (46 - 49) in den Längsseiten (25, 26) des Blockdeckels (13) derart beanstandet sind, so daß jeder in senkrechter Stellung befindliche Tragbügel (28, 29) von nur einer Hand zu ergreifen ist, und daß als Mittel für die Arretierung der Tragbügel (28, 29) am Blockdeckel (13) zu jeder napfartigen Vertiefung (46-49) ein auf einem waagrechten Absatz (52) des Blockdeckels (13) und mit Abstand zu der jeweiligen Längsseite (25, 26) stehender, nach oben weisender lappenartiger Vorsprung (51) vorgesehen ist, dessen freies Ende unterhalb der napfartigen Vertiefung (46-49) endet, und daß die freien Schenkel jedes Tragbügels (28, 29) einen flanschartigen Sicherungsbereich (50) aufweisen, der jeweils koaxial zum Drehzapfen (38, 39) am freien Endabschnitt (36, 37) des zugehörigen Tragbügels (28, 29) angeformt ist und sich teilweise zwischen dem lappenartigen Vorsprung (51) des Blockdeckels und der jeweiligen Längsseite (25, 26) des Blockdeckels (13) befindet.

2. Akkumulatoren-Batterie nach Anspruch 1, dadurch gekennzeichnet, daß jeder lappenartige Vorsprung (51) am Blockdeckel (13) als freies Ende eine Begrenzungsfläche (56) und außerdem jeder jeweils zugehörige flanschartige Sicherungsbereich (50) am Tragbügel (28, 29) eine Begrenzungsseite (55) aufweist, die eine geringere Überlappung mit dem entsprechenden Blockdeckel-Vorsprung (51) hat als der restliche Bereich des flanschartigen Sicherungsbereichs (50) und nur dann parallel zur genannten Begrenzungsfläche (56) am lappenartigen Vorsprung (51) verläuft, wenn der zugehörige Tragbügel (28, 29) geringfügig aus seinem Kanal (27) im Blockdeckel (13) geschwenkt ist.

3. Akkumulatoren-Batterie nach Anspruch 2, dadurch gekennzeichnet, daß in der dem jeweiligen Blockdeckel-Vorsprung (51) zugekehrten Vorderseite (43) des zugehörigen flanschartigen Sicherungsbereichs (50) an den Tragbügeln (28, 29) eine parallel und nahe zur geraden Begrenzungsseite (55) verlaufende Nut (57) und auf der Rückseite (40) des flanschartigen Sicherungsbereichs (50) parallel zu der Nut (57) eine Schräge (58) mit angeformt ist, infolge denen ein in Montagerichtung nachgiebiger Abschnitt des flanschartigen Sicherungsbereichs (50) gebildet ist.

4. Akkumulatoren-Batterie nach einem der Ansprüche 1 bis 3, dadurch gekennzeichnet, daß auf der dem jeweiligen Blockdeckel-Vorsprung (51) zugekehrten Vorderseite (43) des zugehörigen flanschartigen Sicherungsbereichs (50) an den Tragbügeln (28, 29) ein Anschlag (53) mit angeformt ist, der bei etwa senkrechter Stellung der Tragbügel (28, 29) an einer entsprechenden seitlichen Anschlagfläche (54) des jeweiligen Blockdeckel-Vorsprungs (51) anliegt.

5. Akkumulatoren-Batterie nach einem der Ansprüche 1 bis 4, dadurch gekennzeichnet, daß auf der Oberseite des Blockdeckels eine in Längsrichtung der Akkumulatoren-Batterie (10) verlaufende, zumeist allen Zellengefäßen (14) gemeinsame Abdeckkappe (22) für Flüssigkeitseinfüllöffnungen (20) und Entgasungsöffnungen (21) angeordnet und festgelegt ist, die im wesentlichen bündig mit der Oberseite (18) des Blockdeckels (13) abschließt und in der ein entsprechender Abschnitt (27') des Kanals (27) für die Aufnahme der in waagerechter Stellung befindlichen Tragbügel (28, 29) eingeformt ist.

6. Akkumulatoren-Batterie nach einem der Ansprüche 1 bis 5, dadurch gekennzeichnet, daß der Blockkasten (12), der Blockdeckel (13), ggf. mit Abdeckkappe (22), und bevorzugt auch die Tragbügel (28, 29) aus elektrolytbeständigem, thermoplastischem Kunststoff bestehen.

## Claims

1. A storage battery (10), especially a lead storage battery for motor vehicles, with an essentially prismatic housing (11), which comprises a battery case (12) forming all cell containers (14) and a one-piece cover (13) covering the cell containers (14), which block cover (13) is fixed to the battery case (12) and seals off the cell containers (14) from one another and the housing (11) from the outside, which one-piece cover (13) also preferably has recessed areas (23, 24) from which terminals (15, 16) extending with their free end up to the level of the top (18) of the one-piece cover (13) project, which one-piece cover (13) also has two cup-like depressions (46-49) on each of its two longitudinal sides (25, 26), which are arranged at an interval from one another and symmetrically to the mid-point of the longitudinal extent of the storage battery (10), and which one-piece cover (13) is also connected to two C-shaped carrying straps (28, 29) arranged transversely to the longitudinal extent of the storage battery (10), the free end sections (36, 37) of which straps are each provided with a pivot (38, 39) respectively pointing transversely to the longitudinal extent of the storage battery (10) and recessing into the cup-like depressions (46-49) of the one-piece cover (13) and which carrying straps (38, 39) are capable of folding into an essentially vertical and into a horizontal position, said straps in their horizontal position not projecting above the top (18) of the one-piece cover (13), characterised in that the two carrying straps (28, 29) in their horizontal position lie in an open channel (27) in the top (18) of the one-piece cover (13) conforming to their C-shaped configuration and at the same time are turned with their grip areas (30, 31) facing one another, and that in addition the cup-like depressions (46-49) are spaced in the longitudinal sides (25, 26) of the one-piece cover (13) in such a way that each carrying strap (28, 29) situated in a vertical position can be gripped by only one hand, and that as means of locking the carrying straps (28, 29) to the one-piece cover (13) at each cup-like depression (46-49) an upward pointing lug-like projection (51) is provided, located on a horizontal step (52) of the one-piece cover (13) and at a distance from each longitudinal side (25, 26), the free end of which projection terminates below the cup-like depression (46-49), and that the free arms of each carrying strap (28, 29) have a flange-like securing area (50), each of which areas is formed on the free end section (36, 37) of the associated carrying strap (28, 29) coaxially with the pivot (38, 39) and is partially situated between the lug-like projection (51) of the one-piece cover and the respective longitudinal side (25, 26) of the one-piece cover (13).

2. A storage battery as claimed in claim 1, characterised in that each lug-like projection (51) on the one-piece cover (13) has a boundary face (56) as free end and each respectively associated flange-like securing area (50) on the carrying strap (28, 29) has a boundary side (55), which has a smaller overlap with the corresponding one-piece cover projection (51) than the remaining area of the flange-like securing area (50) and runs parallel to the said boundary face (56) on the lug-like projection (51) only when the associated carrying strap (28, 29) is slightly swivelled out of its channel (27) in the one-piece cover (13).

3. A storage battery as claimed in claim 2, characterised in that a groove (57), running parallel and close to the straight boundary side (55), is formed on the carrying straps (28, 29) in the front side (43) of the associated flange-like securing area (50) facing the respective one-piece cover projection (51), and a bevel (58) is formed on the rear side (40) of the flange-like securing area (50) parallel to the groove (57), thereby forming a section of the flange-like securing area (50) which is flexible in the fitting direction.

4. A storage battery as claimed in one of claims 1 to 3, characterised in that a stop (53) is formed on the carrying straps (28, 29) on the front side (43) of the associated flange-like securing area (50) facing the respective one-piece cover projection (51), which stop in an approximately vertical position of the carrying straps (28, 29) bears on a corresponding lateral stop face (54) of the respective one-piece cover projection (51).

5. A storage battery as claimed in one of claims 1 to 4, characterised in that a protective cover (22) for liquid filler openings (20) and breather openings (21), for the most part common to all cell containers (14) and running in the longitudinal direction of the storage battery (10), is arranged and fixed on the top of the one-piece cover, which protective cover is terminated essentially flush with the top (18) of the one-piece cover (13) and in which a corresponding section (27') of the channel (27) is formed for the accommodation of the carrying straps (28, 29) situated in the horizontal position.

6. A storage battery as claimed in one of claims 1 to 5, characterised in that the battery case (12), the one-piece cover (13), possibly with protective cover (22), and preferably also the carrying straps (28, 29) are composed of electrolyte-resistant thermoplastic material.

## Revendications

1. Batterie d'accumulateur (10), en particulier batterie d'accumulateur au plomb pour véhicules automobiles, avec un boîtier sensiblement prismatique (11) qui se compose d'une caisse de bloc (12) contenant tous les compartiments de cellules (14), et d'un couvercle de bloc (13) recouvrant les compartiments de cellules (14), couvercle qui est fixé sur la caisse de bloc (12) et assure l'étanchéité des compartiments de cellules (14) les uns par rapport aux autres et celle du boîtier (11) par rapport à l'extérieur, le couvercle de bloc 13 présentant en outre de préférence des zones de renfoncement (23, 24) à partir desquelles font saillie des pôles de raccordement (15, 16) qui vont, par leur extrémité libre, au plus jusqu'à la hauteur de la face supérieure (18) du couvercle de bloc (13), le couvercle de bloc (13) présentant en outre sur chacun de ses deux côtés longitudinaux (25, 26) deux renfoncements (46-49) en forme de godets, renfoncements qui sont disposés symétriquement par rapport au milieu de l'étendue longitudinale de la batterie d'accumulateur (10), à une certaine distance l'un de l'autre, et le couvercle de bloc (13) étant en outre relié à deux étriers de transport (28, 29) en forme de C disposés perpendiculairement à l'étendue longitudinale de la batterie d'accumulateur (10), étriers dont les sections terminales libres (36, 37) sont pourvues d'un téton de rotation (38, 39) orienté perpendiculairement à l'étendue longitudinale de la batterie d'accumulateur (10) et qui s'enfonce dans les renfoncements en forme de godets (46, 49) du couvercle de bloc (13), et les étriers de transport (38, 39) pouvant être repliées dans une position sensiblement verticale et dans une position horizontale, les étriers de transport, quand ils sont dans la position horizontale ne faisant pas saillie au-dessus de la face supérieure (18) du couvercle de bloc (13), batterie d'accumulateur caractérisée en ce que les deux étriers de transport (28, 29), quand ils sont dans leur position horizontale se trouvent dans un canal (27) pratiqué dans la face supérieure (18) du couvercle de bloc (13), adapté à leur configuration en forme de C, ouvert vers le haut et sont dans ce cas tournés l'un vers l'autre par les zones de leurs poignées (30, 31), en ce qu'en outre les renfoncements en forme de godets (46-49) sont placés à distance les uns des autres dans les côtés longitudinaux (25, 26) du couvercle de bloc (13) de telle façon que chaque étrier de transport (28, 29) qui se trouve en position verticale puisse être saisi d'une seule main, en ce qu'il est prévu comme moyen de blocage des étriers de transport (28, 29) sur le couvercle de bloc (13) pour chaque renfoncement (48-49) en forme de godet, une saillie (51) se trouvant sur un appendice horizontal (52) du couvercle de bloc (13) et à une certaine distance par rapport au côté longitudinal correspondant (25, 26), en forme de patte tournée vers le haut, saillie dont l'extrémité libre se termine en-dessous du renfoncement en forme de godet (46-49) et en ce que les branches libres de chaque étrier de transport (28, 29) présentent une zone de fixation (50) en forme de bride, qui est formée de façon coaxiale au téton de rotation (38, 39) sur la section terminale libre (36, 37) de l'étrier de transport correspondant (28, 29) et se trouve en partie entre la saillie en forme de patte (51) du couvercle de bloc et du côté longitudinal (25, 26) respectif du couvercle de bloc (13).

2. Batterie d'accumulateur selon la revendication 1, caractérisée en ce que chaque saillie (51) en forme de patte présente sur le couvercle de bloc (13), comme extrémité libre une surface de limitation (56), et en outre chaque zone de fixation respectivement correspondante, en forme de bride (50) présente sur l'étrier de transport (28, 29) une face de limitation (55) qui a un plus petit recouvrement avec la saillie correspondante (51) du couvercle de bloc que la zone restante de la zone de fixation (50) en forme de bride, et s'étend alors seulement en parallèle à la surface de limitation mentionnée (56) sur la saillie en forme de patte (51), quand l'étrier de transport correspondant (28, 29) pivote légèrement hors de son canal (27) dans le couvercle de bloc (13).

3. Batterie d'accumulateur selon la revendication 2, caractérisée en ce que, dans la face antérieure (43) tournée vers la saillie correspondante (51) du couvercle de bloc de la zone de fixation correspondante en forme de bride (50), on a formé en même temps une rainure (57) qui s'étend parallèlement à la face de limitation (55) droite et à proximité de celle-ci, et un biseau (58) parallèlement à la rainure (57) sur la face arrière (40) de la zone de fixation (50) en forme de bride, à la suite desquels on forme une section flexible en direction du montage de la zone de fixation (50) en forme de bride.

4. Batterie d'accumulateur selon l'une des revendications 1 à 3, caractérisée en ce que sur la face avant (43) de la zone de fixation correspondante (50) en forme de bride, qui est tournée vers la saillie correspondante (51) du couvercle de bloc, on forme en même temps sur les étriers de transport (28, 29) une butée (53) qui repose quand l'étrier de transport (28, 29) est en position à peu près verticale sur une surface latérale correspondante de butée (54) de la saillie correspondante (51) du couvercle du bloc.

5. Batterie d'accumulateur selon l'une des revendications 1 à 4, caractérisée en ce que, sur la face supérieure du couvercle de bloc, on dispose et on fixe un chapeau de recouvrement (22) commun à au moins tous les compartiments de cellules (14), s'étendant dans le sens longitudinal de la batterie d'accumulateur (10), pour les orifices de remplissage de liquide (20) et les orifices d'évacuation des gaz (21), chapeau qui rejoint sensiblement à fleur la face supérieure (18) du couvercle de bloc (13) et dans lequel on forme une section correspondante (27') du canal (27) pour recevoir les étriers de transport (28, 29) se trouvant en position horizontale.

6. Batterie d'accumulateur selon l'une des revendications 1 à 5, caractérisée en ce que la caisse de bloc (12), le couvercle de bloc (13), le cas échéant avec le chapeau de recouvrement (22), et de préférence aussi les étriers de transport (28, 29), sont réalisés en une matière thermoplastique résistant à l'électrolyte.
